# EUROPÄISCHE PATENTSCHRIFT

(11) **EP 2 401 229 B1**
(45) Veröffentlichungstag und Bekanntmachung des Hinweises auf die Patenterteilung: **18.09.2013**
(21) Anmeldenummer: 10711995.0
(22) Anmeldetag: 23.02.2010
(51) Int. Cl.: C01B 25/37, C01B 25/45, C02F 1/469, B01D 61/58, B01D 61/44

(54) **VERFAHREN ZUR AUFREINIGUNG LITHIUMHALTIGER ABWÄSSER BEI DER KONTINUIERLICHEN HERSTELLUNG VON LITHIUMÜBERGANGSMETALLPHOSPHATEN**
METHOD FOR PURIFYING LITHIUM-CONTAINING WASTEWATER DURING THE CONTINUOUS PRODUCTION OF LITHIUM TRANSITION METAL PHOSPHATES
PROCÉDÉ D'ÉPURATION D'EAUX USÉES CONTENANT DU LITHIUM LORS DE LA PRODUCTION CONTINUE DE PHOSPHATES DE MÉTAUX DE TRANSITION DE LITHIUM

(30) Priorität: 24.02.2009 DE 102009010264
(43) Veröffentlichungstag der Anmeldung: 04.01.2012
(73) Patentinhaber: Süd-Chemie IP GmbH & Co. KG, 80333 München (DE)
(72) Erfinder: FISCHER, Josef, 85419 Mauern (DE); HARTEL, Johannes, 84137 Vilsbiburg (DE)
(74) Vertreter: Stolmár & Partner
(86) Internationale Anmeldenummer: PCT/EP2010/001120
(87) Internationale Veröffentlichungsnummer: WO 2010/097202

(56) Entgegenhaltungen:
- WO-A1-2010/056322
- DE-A1-102004 012 334
- DE-A1-102005 012 640
- DATABASE WPI Week 200506 Thomson Scientific, London, GB; AN 2005-051258 XP002599387 & JP 2004 359538 A (NIPPON CHEM IND) 24. Dezember 2004 (2004-12-24)

## Beschreibung

Die vorliegende Erfindung betrifft ein Verfahren zur Aufreinigung von lithiumhaltigen Abwässern bei der kontinuierlichen Herstellung von Lithiumübergangsmetallphosphaten.

Lithiummetallphosphatverbindungen, insbesondere Lithiumübergangsmetallphosphatverbindungen finden neuerdings weite Verbreitung als Kathoden- und Anodenmaterialien in Sekundärionenbatterien (US 5,910,382, WO 02/099913). Neben Festkörpersynthesen für derartige Lithiumübergangsmetallphosphate kommen auch nasschemische Methoden zur Herstellung derartiger Verbindungen zum Einsatz, wie sie beispielhaft in der DE 10353266 A1 oder in der WO 02/083555 beschrieben sind. In derartigen nasschemischen Verfahren lässt sich beispielsweise auch die Partikelmorphologie des erzeugten Lithiumübergangsmetallphosphats besonders gut kontrollieren.

In diesen nasschemischen Verfahren wird typischerweise Lithiumhydroxid als Lithiumausgangsverbindung eingesetzt, das in einem der Syntheseschritte mit einer sauren Lösung, enthaltend üblicherweise Phosphorsäure, und mindestens einem Übergangsmetallsulfat zusammengebracht wird. Problematisch bei der Herstellung von Lithiumübergangsmetallphosphaten nach derartigen nasschemischen Verfahren ist aber insbesondere der hohe Verlust an Lithiumionen in der sogenannten Ablauge, deren erneute Verwendung in typischen industriellen Kreisprozessen, insbesondere bei der Aufarbeitung und Rückgewinnung der Ausgangsstoffe, durch hohe Gehalte an Fremdionen, insbesondere durch Sulfat, erschwert wird.

Bislang waren nur verfahrenstechnisch äußerst aufwendige Reinigungsverfahren bekannt, um eine Wiederaufbereitung der Lithium-haltigen Ablauge zu ermöglichen. Eine weitere Möglichkeit ist beispielsweise in der DE 10 2007 033460 beschrieben, wobei durch Zugabe von Bariumhydroxid Bariumsulfat ausgefällt wird und LiOH in Lösung verbleibt. Nachteilig an diesem Verfahren ist jedoch der große Anfall an Bariumsulfat, was dabei nur schwer in akzeptablen sogenannten Blanc fixe Typen für eine weitere industrielle Verwendung erhältlich ist.

Die Aufgabe der vorliegenden Erfindung bestand daher darin, ein weiteres neues Verfahren zur Verfügung zu stellen, das eine wirtschaftliche und effiziente Wiederverwendung und Aufbereitung von Lithium- und Sulfationen-haltigen Abwässern insbesondere bei der kontinuierlichen Herstellung von Lithiumübergangsmetallphosphätverbindungen ermöglicht.

Diese Aufgabe wird gelöst durch ein Verfahren zur Aufreinigung von lithiumhaltigen Abwässern in einem Kreisprozess zur kontinuierlichen Herstellung von Lithiumübergangsmetallphosphaten der Formel LiMPO₄ umfassend die Schritte des:
a) Bereitstellens einer wässrigen Reaktionsmischung enthaltend LiOH, H₃PO₄ sowie ein Übergangsmetallsulfat
b) Umsetzens der Reaktionsmischung zu einem Lithiumübergangsmetallphosphat
c) Abtrennens des festen Lithiumübergangsmetallphosphats vom löslichen Teil der Reaktionsmischung
d) Unterwerfens des löslichen Teils (Diluat) einer Elektrodialyse.
e) Isolierens des Teils des Elektrodialysats, der eine wässrige LiOH-Lösung enthält.

Der Schritt der Elektrodialyse dient der Aufkonzentrierung bzw. Abreicherung ionischer Komponenten aus der elektrisch ungeladenen Lösung der Lithium- und Sulfationen-haltigen Abwässer, die typischerweise überwiegend Lithiumsulfat enthalten.

Im Falle der vorliegend bevorzugt eingesetzten sogenannten Bipolartechnik durch Verwendung von bipolaren Membranen (siehe z.B. DE 10 2004 012334 A1), kommt die Aufspaltung und Trennung des Diluats in Säuren und Basen und deren Anreicherung vorteilhafterweise hinzu. In einem Gleichspannungsverhältnis permeieren die Ionen entsprechend ihrer Ladung in Richtung der entgegengesetzt geladenen Elektrode. Die Anionen, die negativ geladen sind, wie im vorliegenden Fall SO₄²⁻ wandern zur Anode, die Kationen, d.h. Li⁺ entsprechend zur Kathode. Zur selektiven Kontrolle der Ionenwanderung werden Ionenaustauschermembranen eingesetzt. Anionenaustauschermembranen (AAM) lassen nur Anionen permeieren, während die Kationenaustauschermembranen (KAM) nur für Kationen durchlässig sind.

Typischerweise werden in erfindungsgemäß eingesetzten Elektrodialyseanlagen mehrere Membranen parallel geschaltet, so dass der einfließende Rohlösungsstrom in die Kammern aufgeteilt wird. Eine Kammer besteht aus einem Zellpaar, also einer Anionen-, einer Kationenaustauschermembran sowie den dazugehörigen Bipolarmembranen. Das angelegte elektrische Feld wird orthogonal zur Fließrichtung appliziert. Nach Durchtreten der ersten Membran kann ein Ion die Bewegung in Richtung der gegensätzlich geladenen Elektrode nicht fortsetzen, weil es auf eine gleich geladene Membran trifft. Somit wird alternierend in den Kammern aufkonzentriert und verdünnt. In der Bipolarmembran ist eine Seite positiv und eine Seite negativ geladen. Hierdurch wird erreicht, dass die getrennten Ionen nicht mehr zusammengeführt werden. In der Bipolarmembran findet dann zur Erhaltung der Ionenwanderung die autokatalytische Wasserspaltung statt. Während H⁺-Ionen auf die Säureseite gelangen, werden die OH⁻-Ionen auf die Basenseite geführt. Die Elektroden werden mit einer gesonderten Lösung gespült, um die Produktion von unerwünschten Stoffen durch die Elektrodenreaktionen zu vermeiden.

Die so erhaltene wässrige LiOH-Lösung aus Schritt e) wird bevorzugt wieder der Reaktionsmischung in Schritt a) zugeführt. Die Aufbereitungsquote (d.h. Rückgewinnung) von LiOH aus der Ablauge beträgt üblicherweise ca. 90 %. Zwar sind auch Aufbereitungsquoten von mehr als 90 % mittels des erfindungsgemäßen Verfahrens möglich, z.B. > 95 %, oder > 97 %, doch sind diese Aufbereitungsquoten energetisch ungünstig bei der Verfahrensführung. Dadurch muss nur noch in dem Ausmaß "frisches", also nicht zurückgewonnenes LiOH zugesetzt werden, wie es bei der Umsetzung zum Produkt, nämlich der Lithiumübergangsmetallphosphatverbindung verbraucht wird.

Während der Elektrodialyse entsteht in der anderen Kammer H₂SO₄. Vorteilhafterweise kann dies in einem weiteren Schritt gleich mit einem Übergangsmetall zu einem Übergangsmetallsulfat umgesetzt werden, das dann in besonders vorteilhaften Ausführungsformen der vorliegenden Erfindung in Lösung ebenfalls der Reaktionsmischung in Schritt a) zugegeben wird. Somit wird erfindungsgemäß ein nahezu vollständiger Kreisprozess unter Rückgewinnung bzw. Aufarbeitung der Reaktionsprodukte aus der Herstellung von Lithiumübergangsmetallphosphaten bereitgestellt.

Das Übergangsmetallsulfat zur Verwendung im erfindungsgemäßen Verfahren wird dabei ausgewählt aus mindestens einem aus der Gruppe bestehend aus den Sulfaten des Fe, Co, Ni, Ti, Cu, Nb, Mo, Cu, Zn, Zr, Cr, Ru. Bevorzugt ist dabei Eisensulfat. Durch Einsatz mehrerer verschiedener Übergangsmetallsulfate kann beispielsweise in besonders bevorzugten Ausführungsformen der vorliegenden Erfindung auch dotiertes bzw. gemischt dotiertes Lithiumeisenphosphat, LiMₓFe₁₋ₓPO₄ mit x<1 erhalten werden. Das Übergangsmetall M ist in diesem Fall dabei mindestens eines aus der Gruppe bestehend aus Co, Ni, Ti, Cu, Nb, Mo, Cu, Zn, Zr, Cr, Ru. Nicht einschränkende Beispiele sind zB Niob-, Nickel- und Kobaltdotiertes Lithiumeisenphosphat.

In weiteren bevorzugten Weiterbildungen der vorliegenden Erfindung kann in Schritt a) des erfindungsgemäßen Verfahrens zusätzlich ein Übergangsmetallhydroxid eingesetzt werden. Dieses ist ausgewählt aus den Hydroxiden von Co, Ni, Ti, Cu, Nb, Mo, Cu, Zn, Zr, Cr, Ru, so dass mit dieser Verfahrensvariante dotiertes Lithiumeisenphosphat, insbesondere die schon vorstehend erwähnten erhalten werden können, wenn gleichzeitig als Übergangsmetallsulfat Eisen(II)sulfat eingesetzt wird. Bei dieser Verfahrensvariante ist allerdings der Ausgleich des pH Wertes der Reaktionsmischung durch entsprechende zusätzliche Zugabe von Phosphorsäure wichtig, um den Einfluss des basischen Übergangsmetallhydroxids auszugleichen.

In noch weiteren, besonders bevorzugten Ausführungsformen der vorliegenden Erfindung wird der lösliche Teil (das sogenannte Diluat) der Reaktionsmischung nach Umsetzung in Schritt b) und Abtrennen des löslichen Anteils in Schritt c) vor dem Elektrodialyseschritt d) einer Aufkonzentration in einem Schritt c₁) unterzogen, um den Erfolg und die Ausbeute der bipolaren Elektrodialyse zu optimieren.

Ganz besonders bevorzugt erfolgt die Aufkonzentration des löslichen Teils durch Umkehrosmose und alternativ oder in weiteren bevorzugten Ausführungsformen des erfindungsgemäßen Verfahrens ggf. zusätzlich durch "einfache" (monopolare) Elektrodialyse.

Unter "einfacher Elektrodialyse" wird die ausschließliche Verwendung von monopolaren Ionenaustauschermembranen während der Elektrodialyse verstanden.

Bei dieser Anordnung wird die Lösung weiter, über das Niveau der Umkehrosmose hinausgehend, aufkonzentriert. D.h. Lithiumsulfat wird aufkonzentriert.

In noch einer weiteren besonders vorteilhaften Weiterbildung des erfindungsgemäßen Verfahrens wird das in Schritt d) des erfindungsgemäßen Verfahrens erhaltene abgereicherte Diluat rückgeführt und ebenfalls der Aufkonzentration, bevorzugt wie gesagt durch Umkehrosmose und/oder einfacher Elektrodialyse in Schritt c₁) unterzogen.

Die Umkehrosmose für die Aufkonzentrierung des löslichen Teils der Reaktionsmischung wird bevorzugt mit Hilfe einer mehrstufigen Umkehrosmose (UO) durchgeführt. Dabei wird auch Permeat gewonnen, das so stark abgereichert ist, dass es als VE-Wasser (vollentsalztes Wasser) im Kernprozess zur Aufbereitung des Reaktionsgemisches und zu Reinigungszwecken dienen kann.

Die Umkehrosmose ist wie die Nanofiltration ein druckgetriebenes Membranverfahren, das zur Trennung bzw. Aufkonzentrierung der vorwiegend wässrigen Gemische eingesetzt wird. Die maximale Aufkonzentrierungsrate wird durch den anliegenden Druck und osmotischen Druck der Lösung bestimmt. Die angefallenen Permeate sind salzarm und kann zu Reinigungszwecken wieder eingesetzt werden. Als typische Membranen können beispielsweise Toray UTC 80, Dow Filmtec SW 30, Dow Filmtec NF 90 sowie GE Water Desal SC und Hydranautics SWC4 Umkehrosmosemembranen eingesetzt werden.

Wie gesagt, kann in weiter bevorzugten Ausführungsformen des erfindungsgemäßen Verfahrens eine weitere Aufkonzentrierung des Konzentrates aus dem Umkehrosmoseschritt mit Hilfe einer sogenannten "einfachen" (monopolaren) Elektrodialyse (die auch, wie schon geschildert, alternativ zur Unkehrosmose eingesetzt werden kann)erfolgen. Das Konzentrat aus diesem Verfahrensschritt ist Eingangsmedium für Schritt d), das abgereicherte Diluat wird anschließend wieder zum vorherigen Schritt c₁) geleitet.

Nach der bevorzugt mehrstufig durchgeführten Umkehrosmose erhält man eine Lösung mit ca. 130 g/l "Salz"gehalt, überwiegend Li₂SO₄. Diese Lösung kann dann mit "einfacher" (monopolarer), Elektrodialyse auf ca. 180 - 200 g/l weiter aufkonzentriert werden und schließlich in die bipolare Elektrodialyse eingespeist werden. Dies hat insbesondere den Vorteil, dass der verfahrenstechnisch vorteilhafte Parameter einer möglichst hohen Konzentration der Eingangslösung in die bipolare Elektrodialyse erfüllt ist. Durch möglichst hohe Eingangskonzentrationen der Lösung wird einerseits die Energieausbeute positiv beeinflusst und andererseits die erforderliche Membranfläche an teuren bipolaren Membranen reduziert.

Die Erfindung ist anhand der nachfolgenden Ausführungsbeispiele und Figuren näher erläutert, die als nicht einschränkend verstanden werden sollen.

Es zeigen
- Fig. 1:: die Prozessdaten einer Elektrodialyse,
- Fig. 2:: den Verlauf der Konzentrationen der verschiedenen Kammern während der Elektrodialyse,
- Fig. 3:: den absoluten Energiebedarf während der Elektrodialyse,
- Fig. 4:: den schematischen Versuchsaufbau einer Elektrodialyseapparatur,
- Fig. 5:: den schematischen Verfahrensablauf.

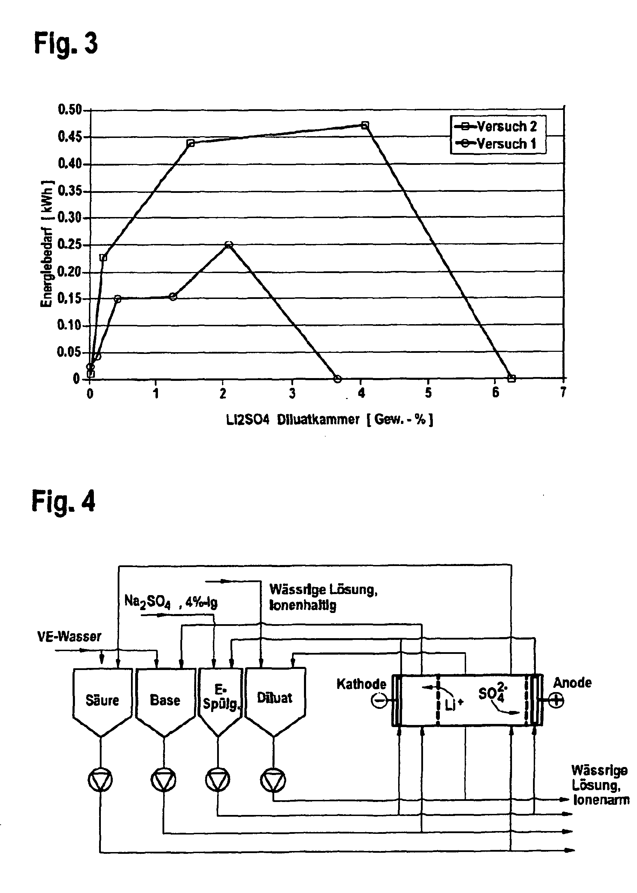

Fig. 4 zeigt den schematischen Versuchsaufbau einer Elektrodialysevorrichtung mit Bipolartechnik, die im erfindungsgemäßen Kreisprozess eingesetzt wird. Aus einer temperierbaren Vorlage wird die Zulauflösung mittels Pumpen über die Membranen gefördert. Im Gleichspannungsfeld des Elektrodialysestacks wandern die Ionen in die Säure bzw. Basenkammer, die zu Beginn mit Wasser gefüllt sind (die Säurekammer ist aus Stabilitätsgründen mit H₂SO₄ auf einen pH von 2 eingestellt). Das abgereicherte Diluat und die entstandene Säure und Base werden im Kreislauf in die Vorlagen zurückgefördert und so eine batchweise Abreicherung des Feeds erreicht.

Im großtechnischen Prozess gemäß der vorliegenden Erfindung wird der Prozess kontinuierlich betrieben, dergestalt, dass die in die bipolare Elektrodialyse eingespeisten Teilströme wässrige Lösung/Diluat, Säure und Base über die jeweiligen Vorlagen im Kreis über das sogenannte Elektrodialyse-Stack (d.h. die Mehrzahl der Membranen) gefahren werden und jeweils ein kleinerer Teil dieser Kreisströme ausgeschleust wird. Über das Überströmungsverhältnis kann die jeweilige gewünschte Konzentration des Teilstroms eingestellt werden.

Als Membranen für die bipolare Elektrolyse können beispielsweise Tokuyama CMS (Mono-Kationen permselektive Membran), Tokuyama ACM (Protonenblocker-Anionenaustauschermembran) sowie Tokuyama BP-1 als Bipolarmembran verwendet werden.

Die Elektrodialyse wurde typischerweise bei 15 V Spannungskonstante bei einer Temperatur von 35 °C durchgeführt. Die Überströmung der Membranen betrug pro Kammer rund 50 1 je Stunde. Als Elektrodenspüllösung wurde eine vierprozentige Natriumsulfatlösung eingesetzt. Bevorzugt ist allerdings anstelle der Na-Sulfatlösung eine Li₂SO₄-Lösung, um keine "Fremdionen" in den Kernprozess und damit in das Lithiumübergangsmetallphosphat einzubringen.

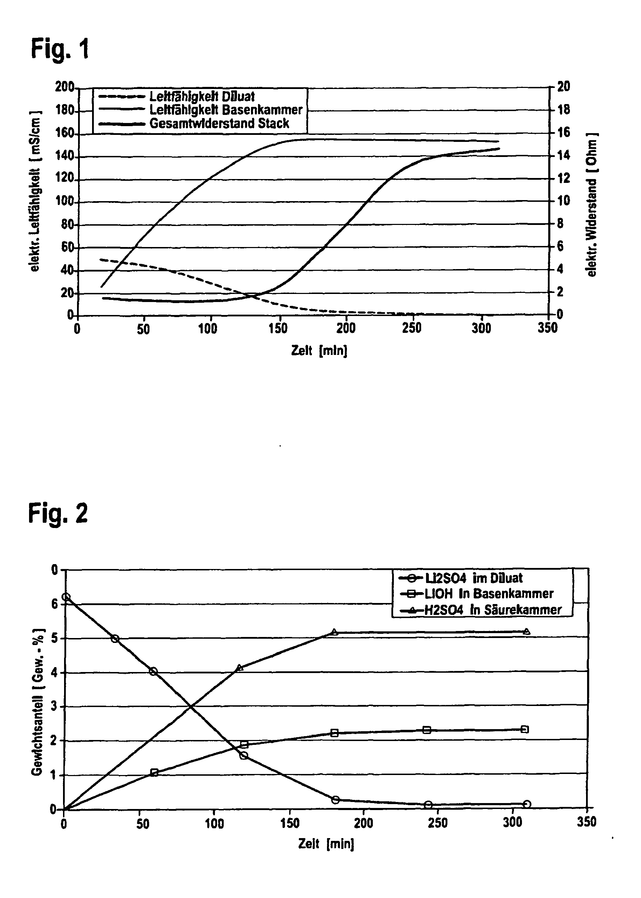

Fig. 1 zeigt, dass, während die Diluatkammer immer weiter von Salzen abgereichert wird, die Konzentration von LiOH in der Basenkammer sich immer weiter erhöht. Aufgrund der Abreicherung der Diluatkammer wird der elektrische Widerstand im Stack immer weiter erhöht.

Fig. 2 bestätigt die Ergebnisse aus Fig. 1 und zeigt den Verlauf der Konzentration in den verschiedenen Kammern der Elektrodialyse. Die Stromausbeute gibt an, wie viel des aufgewendeten Stroms zur Ab- bzw. Anreicherung genutzt werden kann und wie viel Strom durch Effekte wie Rückdiffusion und Stromleckage verloren geht.

Wichtig ist auch der Energiebedarf, der in Fig. 3 gezeigt wird. Die Darstellung zeigt, dass es günstig ist, mit einer hohen Lithiumsulfatkonzentration zu starten und die Abreicherung nicht erst bei kompletter Abreicherung zu stoppen. Zwar sinkt der absolute Energiebedarf gegen Ende der Abreicherung ab, aber die Energie kann nicht effizient genutzt werden. Im Falle der höheren Konzentration in Basen- und Säurekammer ist ein erhöhter Energiebedarf zur Vermeidung von Rückdiffusion nötig. Im Rahmen des erfindungsgemäßen Verfahrens betrug die Durchsatzmenge durch die Elektrodialyse ca. 1,9 t je Stunde aufkonzentriertes Abwasser, die Konzentration des Mediums nach der Umkehrosmose lag in einem Bereich von 90 bis 140 g je Liter, bevorzugt bei ca. 130 g je Liter Li₂SO₄. Nach weiterer Aufkonzentrierung mit "einfacher" (monopolarer) Elektrodialyse betrug die Konzentration ca. 180 bis 200 g je Liter. Die Stromdichte betrug ca. 660 A/m² und die Stromausbeute 70 %.

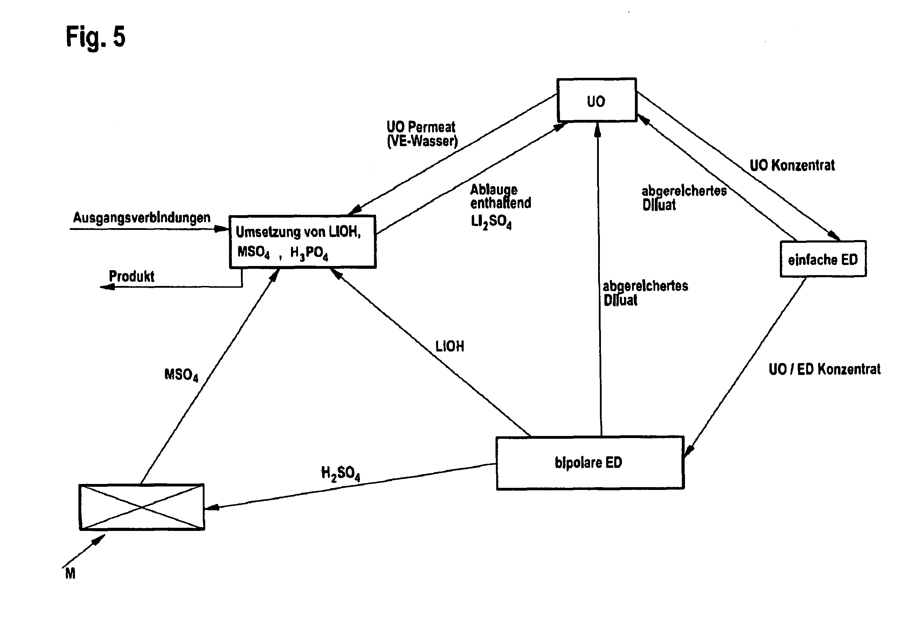

Fig. 5 zeigt in schematischer Darstellung des erfindungsgemäßen Verfahrens eine bevorzugte Ausführungsform.

Die Reaktionsmischung aus LiOH, MSO₄, H₃PO₄, wobei MSO₄ ein Übergangsmetallsulfat beispielsweise Eisensulfat, Nickelsulfat, Niobsulfat, Kobaltsulfat etc. ist, wird unter den vorstehend geschilderten Bedingungen umgesetzt. Die Ausgangsverbindungen werden zugeführt. Hier insbesondere LiOH, welches nicht zurückgewonnen bzw. zum Produkt Lithiumübergangsmetallphosphatverbindung umgesetzt wurde sowie H₃PO₄.

Nach der Umsetzung entsteht zum einen eine Ablauge enthaltend Li₂SO₄, zum anderen wird das Produkt, die Lithiumübergangsmetallphosphatverbindung, ausgetragen.

Die Ablauge enthaltend Li₂SO₄ wird einer mehrstufigen Umkehrosmose (UO) unterzogen und das UO-Permeat, welche die Qualität von vollentsalztem (VE) Wasser aufweist, der Reaktionsmischung für die Umsetzung wieder rückgeführt. Das Konzentrat der Umkehrosmose wird anschließend einer einfachen (monopolaren) Elektrodialyse unterzogen und das Diluat aus der einfachen (monopolaren) Elektrodialyse erneut der Umkehrosmose zugeführt. Das Konzentrat aus der kombinierten Umkehrosmose und Elektrodialyseanreicherung wird anschließend einer bipolaren Elektrodialyse unterworfen, wobei das entstehende LiOH im Kreisprozess in die Reaktionsmischung zurückgeführt wird, während die entstehende Schwefelsäure für die Umsetzung mit einem Übergangsmetall verwendet wird. Nach erfolgter Umsetzung mit einem Metall M, beispielsweise Fe, Co, Ni, Cr, Nb, etc. kann das entstehende oder die entstehenden Metallsulfate ebenfalls in die Reaktionsmischung eingeführt werden.

## Patentansprüche

1. Verfahren zur Aufreinigung von lithiumhaltigen Abwässern bei der kontinuierlichen Herstellung von Lithiumübergangsmetallphosphaten der Formel LiMPO₄ ausgehend von LiOH, umfassend die Schritte des:
a) Bereitstellens einer wässrigen Reaktionsmischung enthaltend LiOH, H₃PO₄ sowie ein Übergangsmetallsulfat
b) Umsetzens der Reaktionsmischung zu einem Lithiumübergangsmetallphosphat
c) Abtrennens des festen Lithiumübergangsmetallphosphats vom löslichen Teil der Reaktionsmischung
d) Unterwerfens des löslichen Teils (Diluat) einer Elektrodialyse
e) Isolierens des Teils des Elektrodialysats, der eine wässrige LiOH-Lösung enthält.

2. Verfahren nach Anspruch 1, wobei die wässrige LiOH-Lösung aus Schritt e) der Reaktionsmischung gemäß Schritt a) wieder zugeführt wird.

3. Verfahren nach Anspruch 1, wobei während der Elektrodialyse H₂SO₄ entsteht.

4. Verfahren nach Anspruch 3, wobei ein Übergangsmetall mit der H₂SO₄ gemäß Anspruch 3 zu einem Übergangsmetallsulfat umgesetzt wird.

5. Verfahren nach Anspruch 4, wobei das Übergangsmetallsulfat der Reaktionsmischung in Schritt a) zugegeben wird.

6. Verfahren nach Anspruch 4, wobei das Übergangsmetall ausgewählt wird aus mindestens einem aus der Gruppe bestehend aus Fe, Co, Ni, Ti, Cu, Nb, Mo, Cu, Zn, Zr, Cr, Ru.

7. Verfahren nach Anspruch 1, wobei in Schritt a) weiter ein Übergangsmetallhydroxid eingesetzt wird.

8. Verfahren nach Anspruch 7, wobei das Übergangsmetallhydroxid ausgewählt ist aus den Hydroxiden von Co, Ni, Ti, Cu, Nb, Mo, Cu, Zn, Zr, Cr, Ru.

9. Verfahren nach einem der vorhergehenden Ansprüche, wobei vor dem Elektrodialyseschritt d) der lösliche Teil (Diluat) einer Aufkonzentration in einem Schritt c1) unterzogen wird.

10. Verfahren nach Anspruch 9, wobei die Aufkonzentration des löslichen Teils durch Umkehrosmose erfolgt.

11. Verfahren nach Anspruch 9, wobei die Aufkonzentration in Schritt c1) des löslichen Teils (Diluats) durch einfache (monopolare) Elektrodialyse erfolgt.

12. Verfahren nach Anspruch 10 und 11, wobei die Aufkonzentration in Schritt c1) durch Umkehrosmose und einfache (monopolare) Elektrodialyse erfolgt.

## Claims

1. Method for purifying lithium-containing waste waters during the continuous manufacture of lithium transition metal phosphates of the formula LiMPO₄ starting from LiOH, comprising the steps of:
a) providing an aqueous reaction mixture containing LiOH, H₃PO₄ as well as a transition metal sulphate
b) converting the reaction mixture into a lithium transition metal phosphate
c) separating the solid lithium transition metal phosphate from the soluble part of the reaction mixture
d) subjecting the soluble part (diluate) to an electrodialysis
e) isolating the part of the electrodialysate that contains an aqueous LiOH solution.

2. Method according to claim 1, wherein the aqueous LiOH solution from step e) is returned to the reaction mixture according to step a).

3. Method according to claim 1, wherein H₂SO₄ forms during the electrodialysis.

4. Method according to claim 3, wherein a transition metal is converted into a transition metal sulphate with the H₂SO₄ according to claim 3.

5. Method according to claim 4, wherein the transition metal sulphate is added to the reaction mixture in step a).

6. Method according to claim 4, wherein the transition metal is selected from at least one of the group consisting of Fe, Co, Ni, Ti, Cu, Nb, Mo, Cu, Zn, Zr, Cr, Ru.

7. Method according to claim 1, wherein a transition metal hydroxide is also used in step a).

8. Method according to claim 7, wherein the transition metal hydroxide is selected from the hydroxides of Co, Ni, Ti, Cu, Nb, Mo, Cu, Zn, Zr, Cr, Ru.

9. Method according to one of the previous claims, wherein the soluble part (diluate) is subjected to a concentration in a step c1) before the electrodialysis step d).

10. Method according to claim 9, wherein the concentration of the soluble part takes place through reverse osmosis.

11. Method according to claim 9, wherein the concentration in step c1) of the soluble part (diluate) takes place through single (monopolar) electrodialysis.

12. Method according to claims 10 and 11, wherein the concentration in step c1) takes place by reverse osmosis and single (monopolar) electrodialysis.

## Revendications

1. Procédé permettant d'épurer des eaux usées contenant du lithium lors de la préparation continue de phosphates de métaux de transition de lithium, lesquels répondent à la formule LiMPO₄, à partir de LiOH, comprenant les étapes consistant à :
a) fournir un mélange réactionnel aqueux contenant du LiOH, du H₃PO₄ ainsi qu'un sulfate d'un métal de transition
b) faire réagir ledit mélange réactionnel pour ainsi obtenir un phosphate d'un métal de transition de lithium
c) séparer le phosphate d'un métal de transition de lithium à l'état solide de la partie soluble dudit mélange réactionnel
d) soumettre la partie soluble (le diluat) à une électrodialyse
e) isoler la partie de l'électrodialysat laquelle contient une solution aqueuse de LiOH.

2. Procédé selon la revendication 1, la solution aqueuse de LiOH issue de l'étape e) étant recyclée dans le mélange réactionnel selon l'étape a).

3. Procédé selon la revendication 1, ladite électrodialyse conduisant à la formation de H₂SO₄.

4. Procédé selon la revendication 3, un métal de transition étant amené à réagir avec le H₂SO₄ selon la revendication 3 pour ainsi obtenir un sulfate de métal de transition.

5. Procédé selon la revendication 4, ledit sulfate de métal de transition étant introduit à l'étape a) dans le mélange réactionnel.

6. Procédé selon la revendication 4, ledit métal de transition étant un ou plusieurs éléments choisis dans le groupe constitué de Fe, Co, Ni, Ti, Cu, Nb, Mo, Cu, Zn, Zr, Cr, Ru.

7. Procédé selon la revendication 1, l'étape a) impliquant en outre la mise en oeuvre d'un hydroxyde d'un métal de transition.

8. Procédé selon la revendication 7, ledit hydroxyde d'un métal de transition étant choisi parmi les hydroxydes de Co, Ni, Ti, Cu, Nb, Mo, Cu, Zn, Zr, Cr, Ru.

9. Procédé selon l'une des revendications précédentes, la partie soluble (le diluat) étant soumise, au préalable de l'étape d'électrodialyse d), une concentration réalisée dans une étape c1).

10. Procédé selon la revendication 9, ladite concentration de la partie soluble étant réalisée par osmose inverse.

11. Procédé selon la revendication 9, ladite concentration de la partie soluble (du diluat) étant réalisée à l'étape c1) par électrodialyse simple (à pôle unique).

12. Procédé selon les revendications 10 et 11, ladite concentration étant réalisée l'étape c1) par osmose inverse et par électrodialyse simple (à pôle unique).
